# EUROPÄISCHE PATENTSCHRIFT

(11) **EP 0 816 189 B1**
(45) Veröffentlichungstag und Bekanntmachung des Hinweises auf die Patenterteilung: **21.05.2003**
(21) Anmeldenummer: 97111315.4
(22) Anmeldetag: 04.07.1997
(51) Int. Cl.: B60R 22/46, B60R 21/26, F42B 3/26

(54) **Sicherheitseinrichtung für Fahrzeuge**
Safety device for vehicles
Dispositif de sécurité pour véhicules

(30) Priorität: 04.07.1996 DE 29611657 U
(43) Veröffentlichungstag der Anmeldung: 07.01.1998
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Kitzhofer, Thomas, Dipl.-Ing.

(56) Entgegenhaltungen:
- EP-A- 0 588 264
- WO-A-96/04154
- DE-U- 8 437 589
- DE-U- 29 612 781

## Beschreibung

Die Erfindung betrifft eine Sicherheitseinrichtung für Fahrzeuge, insbesondere einen Linearantrieb eines Gurtstraffers oder eine Aufblaseinheit für einen Gassack, mit im Inneren eines Zylinderrohres an die Zylinderwandung angrenzend angeordnetem pyrotechnischen Gasgeneratormaterial und einem elektrischen Zünder.

Bei bislang üblichen Aufblaseinheiten für Gassäcke steht der elektrische Zünder seitlich weit vom Zylinderrohr ab, wobei der Zünder meist mit dem Zylinderrohr unlösbar verbunden ist. Für eine derartige Aufblaseinheit muß entsprechend viel Bauraum im Fahrzeug zur Verfügung gestellt werden, wodurch sich jedoch Platzprobleme ergeben können. Ähnliche Probleme treten auch bei Linearantrieben auf, bei denen seitlich von der Wandung eines Zylinders einer Kolben/Zylinder-Einheit üblicherweise ein Fortsatz absteht, in dem Gasgeneratormaterial untergebracht ist und von dem wiederum noch zusätzlich der meist fest eingebettete Zünder absteht. Weist das Zylinderrohr keinen Fortsatz auf und ist das Gasgeneratormaterial im Inneren des Zylinderrohres angeordnet, steht jedoch der elektrische Zünder seitlich weit vom Zylinderrohr ab. Seitlich abragende Teile sind überdies wegen des langen Hebelarms mechanisch gefährdet.

Die Erfindung schafft eine Sicherheitseinrichtung für Fahrzeuge, die einerseits verminderten mechanischen Beanspruchungen ausgesetzt ist und sich andererseits durch einen geringeren Bauraum in seitlicher Richtung auszeichnet, so daß der Linearantrieb oder die Aufblaseinheit kompakter ist. Dies wird bei einer Sicherheitseinrichtung der eingangs genannten Art erfindungsgemäß dadurch erreicht, daß der Zünder als parallel zur Zylinderachse gestreckter Körper ausgebildet und außen an die Mantelfläche des Zylinderrohres gegenüber einer Durchgangsöffnung an diesem angesetzt ist. Die Längsachse der Zündeinheit erstreckt sich deshalb nicht wie bislang üblich rechtwinkelig zur Zylinderachse, sondern parallel dazu, so daß die Zündeinheit seitlich kaum noch von dem Zylinderrohr absteht. Der Zünder wird an das Zylinderrohr angesetzt, d.h. er bildet eine eigenständige Einheit, die erst nach dem Einbau des Zylinderrohres im Fahrzeug angeschlossen werden kann, wodurch nicht die Gefahr besteht, daß Zündkabel beim Einbau des Zylinderrohres beschädigt werden. Ferner kann der Zünder getrennt vom Zylinderrohr mit dem sich darin befindlichen Gasgeneratormaterial transportiert werden, so daß ein ungewolltes Zünden des pyrotechnischen Materials beim Transport vermieden wird.

Die erfindungsgemäße Sicherheitseinrichtung weist vorzugsweise einen Zünder mit einem massiv aus isolierendem Material gebildeten Körper auf, in den eine Zündpille, d.h. ein von Zündmaterial umgebener Zündwiderstand, eingebettet ist. Die Zündpille liegt der Durchgangsöffnung des Zylinderrohres, insbesondere in diese hineinragend, gegenüber. Dadurch ergibt sich ein gewünschter geringer Abstand vom Gasgeneratormaterial.

Ein gleichfalls in die Masse des Körpers eingebettetes, an die Zündpille angeschlossenes Kabel tritt vorzugsweise stirnseitig aus dem Körper aus, so daß es seitlich nicht absteht, und ist ferner vorzugsweise kurvenförmig in den Körper des Zünders eingebettet, so daß die Anschlußstelle an der Zündpille zugentlastet ist.

Der Zünder wird gemäß der bevorzugten Ausführungsform durch ein Spannband am Zylinderrohr befestigt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1a eine Längsschnittansicht durch eine erfindungsgemäße Sicherheitseinrichtung in Form eines Linearantriebs eines Gurtstraffers,
Fig. 1b eine Schnittansicht durch die Sicherheitseinrichtung gemäß einer weiteren Ausführungsform im Bereich der Befestigung des Zünders am Rohr,
Fig. 2 eine Schnittansicht längs der Linie II-II in Fig. 1a,
Fig. 3 eine Längsschnittansicht durch einen gegenüber dem in den Figuren 1a, b und 2 gezeigten, geringfügig modifizierten Zünder, und
Fig. 4 eine Rückansicht des Zünders nach Fig. 3, teilweise aufgebrochen.

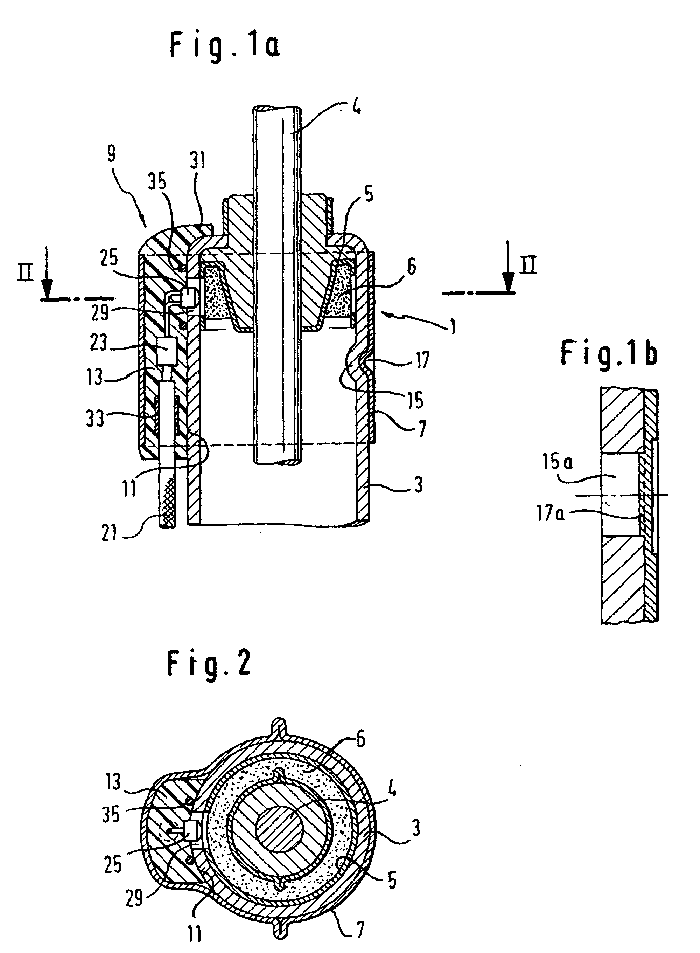

In Fig. 1a ist ein Linearantrieb 1 eines Gurtstraffers gezeigt, der ein Zylinderrohr 3 aufweist, in dem ein Kolben mit einer angrenzenden Kolbenstange 4 verschiebbar angeordnet ist. Im Inneren des Zylinderrohres 3 grenzt an die Zylinderwandung, von dieser lediglich durch eine dünne Ummantelung 5 getrennt, pyrotechnisches Gasgeneratormaterial 6 an. An der äußeren Mantelfläche des Zylinderrohres 3 ist durch ein Spannband 7, das aus einem Rohrprofil hergestellt wird, ein elektrischer Zünder 9 befestigt. Das Spannband 7 umschließt den Zünder 9 und das Zylinderrohr 3 und preßt den Zünder 9 mit seiner Innenseite 11 gegen das Zylinderrohr 3. Zur besseren Lagefixierung von Zylinderrohr 3, Spannband 7 und Zünder 9 zueinander weist das Zylinderrohr 3 eine Einbuchtung 15 auf, in die ein Fortsatz 17 am Spannband 7 eindringt. Ferner ist die Innenseite 11 der Außenkontur des Zylinderrohres 3 angepaßt, wodurch der Zünder 9 nicht nur weniger vom Zylinderrohr 3 absteht, sondern auch gegen Verdrehen gesichert ist.

In Fig. 1b ist dargestellt, daß das Zylinderrohr 3 auch eine Öffnung 15b haben kann, in die sich eine entsprechend geformte Ausbuchtung 17a erstreckt.

Der Zünder 9 ist als gestreckter Körper ausgebildet, der parallel zur Zylinderachse am Zylinderrohr 3 befestigt und massiv aus isolierendem Material 13 gebildet ist. In den Körper ist ein Kabel 21 eingebettet, das stirnseitig aus ihm herausragt. Ebenfalls in den Körper eingebettet sind eine Hochfrequenzdrossel 23 und eine sich daran anschließende Zündpille 25. Die Anschlußdrähte der Zündpille 25 sind zu der Innenseite 11 hin rechtwinkelig gebogen.

Die Zündpille 25 steht aus dem Körper leicht vor und ragt im montierten Zustand des Zünders 9 in eine Durchgangsöffnung 29 im Zylinderrohr 3, die zum Gasgeneratormaterial 6 führt.

Die axiale Lage des Zünders 9 muß so zum Zylinderrohr 3 ausgerichtet sein, daß die Zündpille 25 stets an die Durchgangsöffnung 29 angrenzt oder in sie hineinragt. Zur besseren Festlegung des Zünders 9 weist sein Körper an seiner Oberseite eine in Richtung zum Zylinderrohr 3 vorstehende Nase 31 auf, die an der Stirnseite des Zylinderrohres 3 angreift und in ihrer Form der Außenkontur des Zylinderrohres 3 angepaßt ist.

Zur sicheren Abdichtung gegen Feuchtigkeitseintritt sind in den Körper Dichtungen eingebettet. Eine Dichtung 33 umschließt das Kabel 21. Eine weitere Dichtung 35 umgibt die Zündpille 25 und liegt an der Mantelfläche des Zylinderrohres 3 dichtend an.

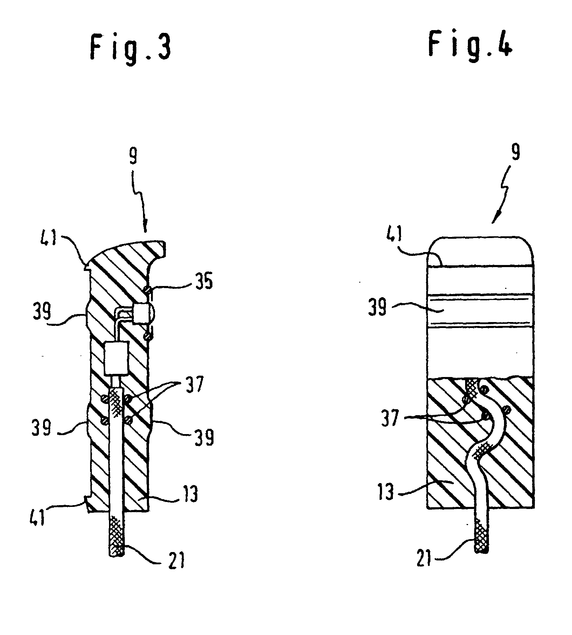

Bei dem in Fig. 3 gezeigten Zünder 9 ist das Kabel 21 kurvenförmig in den Körper eingebettet, so daß ein Herausziehen des Kabels 21 aus dem Körper erschwert wird. Ferner sind zwei Dichtungen 37 anstatt einer Dichtung 33 vorgesehen. Vorsprünge 39 an der Außenseite des Körpers, an dem das Spannband 7 anliegt, dienen zur lokalen Erhöhung der durch das Spannband 7 verursachten Pressung gegenüber den Dichtungen 35 und 37. Hierzu dient auch ein Gehäusevorsprung 39 an der Innenseite 11 des Körpers, der auf Höhe der Dichtungen 37 vorgesehen ist.

Fortsätze 41 an der Außenseite des Körpers halten den Spannring 7 zusätzlich zumindest in axialer Richtung am Körper.

Aufgrund der langgestreckten Ausbildung des Zünders 9 wird für die gesamte Sicherheitseinrichtung weniger Bauraum im Fahrzeug benötigt. Der Zünder 9 kann relativ lang sein, wodurch seine Halterung am Zylinderrohr 3 verbessert wird. Die sichere Befestigung und die geringen Abmaße des Zünders 9, rechtwinkelig zur Zylinderachse gesehen, schützen ihn vor einem unbeabsichtigten Entfernen vom Zylinderrohr 3 oder vor einer Verschiebung relativ zu diesem durch mißbräuchliches Ziehen am Kabel 21.

## Patentansprüche

1. Sicherheitseinrichtung für Fahrzeuge, insbesondere Linearantrieb eines Gurtstraffers oder Aufblaseinheit für einen Gassack, mit im Inneren eines Zylinderrohres (3) an die Zylinderwandung angrenzend angeordnetem pyrotechnischen Gasgeneratormaterial (6) und einem elektrischen Zünder (9), **dadurch gekennzeichnet, daß** der Zünder (9) als parallel zur Zylinderachse gestreckter Körper ausgebildet und außen an die Mantelfläche des Zylinderrohres (3) gegenüber einer Durchgangsöffnung (29) an diesem angesetzt ist.

2. Sicherheitseinrichtung nach Anspruch 1, **dadurch gekennzeichnet, daß** in den massiv aus isolierendem Material (13) gebildeten Körper eine Zündpille (25) eingebettet ist, die der Durchgangsöffnung (29) des Zylinderrohres (3), insbesondere in diese hineinragend, gegenüberliegt.

3. Sicherheitseinrichtung nach Anspruch 2, **dadurch gekennzeichnet, daß** an die Zündpille (25) ein gleichfalls in die Masse des Körpers eingebettetes Kabel (21) angeschlossen ist, das stirnseitig aus dem Körper austritt.

4. Sicherheitseinrichtung nach Anspruch 3, **dadurch gekennzeichnet, daß** in den Körper des Zünders (9) eine das Kabel (21) umschließende Dichtung (33; 35) eingebettet ist.

5. Sicherheitseinrichtung nach Anspruch 4, **dadurch gekennzeichnet, daß** das Kabel (21) in den Körper des Zünders (9) kurvenförmig eingebettet ist.

6. Sicherheitseinrichtung nach einem der Ansprüche 2 bis 5, **dadurch gekennzeichnet, daß** in den Körper des Zünders (9) eine die Zündpille (25) umgebende Dichtung (35) eingebettet ist, die an der Mantelfläche des Zylinderrohres (3) dichtend anliegt.

7. Sicherheitseinrichtung nach einem der vorstehenden Ansprüche, **dadurch gekennzeichnet, daß** der Körper des Zünders (9) am Zylinderrohr (3) durch ein beide umgebendes Spannband (7) festgelegt ist.

8. Sicherheitseinrichtung nach Anspruch 7 und Anspruch 5 oder 6, **dadurch gekennzeichnet, daß** der Körper des Zünders (9) wenigstens einen an der Mantelfläche des Zylinderrohres (3) anliegenden, die durch das Spannband (7) verursachte Pressung lokal gegenüber der Dichtung (37) erhöhenden Vorsprung (39) aufweist.

9. Sicherheitseinrichtung nach Anspruch 7 oder 8, **dadurch gekennzeichnet, daß** der Körper des Zünders (9) wenigstens einen an dem Spannband (7) anliegenden, die durch das Spannband (7) verursachte Pressung gegenüber der Dichtung (33, 35; 37) erhöhenden Vorsprung (39) aufweist.

10. Sicherheitseinrichtung nach einem der vorstehenden Ansprüche, **dadurch gekennzeichnet, daß** am Körper Fortsätze (41) zum Halten des Spannbandes (7) vorgesehen sind.

11. Sicherheitseinrichtung nach einem der vorstehenden Ansprüche, **dadurch gekennzeichnet, daß** das Zylinderrohr (3) wenigstens eine Einbuchtung (15) aufweist, in die ein entsprechender Fortsatz (17) an der Innenseite des Spannbandes (7) eindringt.

## Claims

1. A vehicular safety device, more particularly a linear drive of a seat belt tensioner or an inflation unit for a gas bag, including pyrotechnical gas generator material (6) disposed in the interior of a cylinder tube (3) adjoining the cylinder wall and an electrical igniter (9), **characterized in that** said igniter (9) is configured as an elongated body extending parallel to the axis of the cylinder and is applied to the outside of the envelope surface of said cylinder tube (3) opposite a through-opening (29) therein.

2. The safety device as set forth in claim 1, **characterized in that** a squib (25) is embedded in said body formed to be solid and of an insulating material (13) and is located opposite the through-opening (29) of said cylinder tube (3), particularly protruding thereinto.

3. The safety device as set forth in claim 2, **characterized in that** a cable (21) is connected to said squib (25) and is also embedded in the mass of the body and emerges at the face end from said body.

4. The safety device as set forth in claim 3, **characterized in that** a seal (33; 35) surrounding said cable (21) is embedded in the body of said igniter (9).

5. The safety device as set forth in claim 4, **characterized in that** said cable (21) is embedded curved in the body of said igniter (9).

6. The safety device as set forth in any of the claims 2 to 5, **characterized in that** a seal (35) surrounding said squib (25) is embedded in the body of said igniter (9) and is in sealing contact with the envelope surface of said cylinder tube (3).

7. The safety device as set forth in any of the preceding claims, **characterized in that** the body of said igniter (9) is secured at said cylinder tube (3) by a tightening strap (7) surrounding both.

8. The safety device as set forth in claim 7 and in claim 5 or 6, **characterized in that** the body of said igniter (9) has at least one protrusion (39) adjoining the envelope surface of said cylinder tube (3) and locally increasing pressure on said seal (37) due to the compression caused by said tightening strap (7).

9. The safety device as set forth in claim 7 or 8, **characterized in that** the body of said igniter (9) has at least one protrusion (39) adjoining said tightening strap (7) and increasing pressure on said seal (33, 35; 37) due to the compression caused by said tightening strap (7).

10. The safety device as set forth in any of the preceding claims, **characterized in that** projections (41) are provided on said body for holding said tightening strap (7).

11. The safety device as set forth in any of the preceding claims, **characterized in that** said cylinder tube (3) includes at least one indentation (15) into which a corresponding projection (17) on the inner side of said tightening strap (7) penetrates.

## Revendications

1. Dispositif de sécurité pour des véhicules, en particulier mécanisme d'entraînement linéaire d'un tendeur de ceinture ou d'une unité de gonflage pour un sac à gaz , avec à l'intérieur d'un tube cylindrique (3) une matière (6) de générateur pyrotechnique disposée de façon adjacente à la paroi du cylindre et avec un allumeur électrique (9), **caractérisé en ce que** l'allumeur (9) est constitué sous la forme d'un corps s'étendant parallèlement à l'axe du cylindre et est attaché à celui-ci à l'extérieur sur la surface enveloppe du tube cylindrique (3) en face d'un orifice de passage (29) dans celui-ci.

2. Dispositif de sécurité selon la revendication 1, **caractérisé en ce que** l'on noie dans le corps formé d'une matière isolante (13) une pastille d'allumage (25), qui se trouve en face de l'orifice de passage (29) du tube cylindrique (3), en pénétrant en particulier dans celui-ci.

3. Dispositif de sécurité selon la revendication 2, **caractérisé en ce que** l'on raccorde un câble (21), qui est noyé également dans la masse du corps, à la pastille d'allumage (25), câble qui sort du corps du côté frontal.

4. Dispositif de sécurité selon la revendication 3, **caractérisé en ce que** l'on noie dans le corps de l'allumeur (9) un joint d'étanchéité (33; 35), qui entoure le câble (21).

5. Dispositif de sécurité selon la revendication 4, **caractérisé en ce que** le câble (21) est noyé dans le corps de l'allumeur (9) en formant une courbe.

6. Dispositif de sécurité selon l'une des revendications 2 à 5,
**caractérisé en ce que** l'on noie dans le corps de l'allumeur (9) un joint d'étanchéité (35), qui entoure la pastille d'allumage (25), et qui repose de façon étanche sur la surface enveloppe du tube cylindrique (3).

7. Dispositif de sécurité selon l'une des revendications précédentes, **caractérisé en ce que** le corps de l'allumeur (9) sur le tube cylindrique (3) est fixé par une bande de serrage (7), qui entoure les deux.

8. Dispositif de sécurité selon la revendication 7 et la revendication 5 ou 6, **caractérisé en ce que** le corps de l'allumeur (9) présente au moins une saillie (39) qui repose sur la surface enveloppe du tube cylindrique (3) et qui augmente le serrage, causé par la bande de serrage (7), localement vis-à-vis du joint d'étanchéité (37).

9. Dispositif de sécurité selon la revendication 7 ou 8, **caractérisé en ce que** le corps de l'allumeur (9) présente au moins une saillie (39), qui repose sur la bande de serrage (7), et qui augmente le serrage causé par la. bande de serrage (7) vis-à-vis du joint d'étanchéité (33, 35; 37).

10. Dispositif de sécurité selon l'une des revendications précédentes, **caractérisé en ce que** l'on prévoit sur le corps des prolongements (41), qui servent à maintenir la bande de serrage (7).

11. Dispositif de sécurité selon l'une des revendications précédentes, **caractérisé en ce que** le tube cylindrique (3) présente au moins un bombement vers l'intérieur (15), dans lequel s'enfonce un prolongement correspondant (17) sur le côté intérieur de la bande de serrage (7).
